# EUROPEAN PATENT APPLICATION

(11) **EP 0 916 887 A1**
(43) Date of publication of application: **19.05.1999**
(21) Application number: 97500226.2
(22) Date of filing: 29.12.1997
(51) Int. Cl.: F16L 21/06, F16L 21/08

(54) **Accessory for pipes**

(30) Priority: 12.11.1997 ES 9702359
(71) Applicant: Martinez Paredes, Jose Luis, 30500 Molina de Segura (Murcia) (ES)
(72) Inventor: Martinez Paredes, Jose Luis, 30500 Molina de Segura (Murcia) (ES)
(74) Representative: Perez Bonal, Bernardo

(57) **Abstract**

Accessory for pipes, of the same diameter and connected to each other through the re-thickened end of one of them, with two equal semi-parts and provided with diametrically opposed tabs, for insertion of the torque means, which characterizes a stepped construction (2) of each semi-part, internally splined (1) and provided with a perforation (3) of the bottom of the step, as well as of a small notch (7) of the internal cental zone of the tabs (8), for the insertion of the end edge (5) of the pipe.

## Description

### OBJECT OF THE INVENTION

The invention defended, consists of an accessory for pipes, with the same diameter and connected to each other through the re-thickened end of one of them, of accessories constructed of two equal semi-parts, and provided with diametrically opposed tabs, for insertion of their torque means.

The invention is characterized by the stepped construction of each semi-part, internally splined and provided with a perforation of the bottom of the step, as well as of a small notch of the internal central zone of the tabs, for the insertion of the end edge of the pipe.

### BACKGROUND OF THE INVENTION

The accessories for pipes are well known elements incorporated to the same and which do not require additional comments. The same occurs with their customary presentation, which are divided into two in order to facilitate their assembly, or the arrangement of diametrical end tabs, for the placement of the respective torque means of the accessory.

The applicant is unaware of the existance of accessories for pipes with the same diameter which permit the connection of the plug to the end of one of the them, with the cut of the other.

### DESCRIPTION OF THE INVENTION

The invention which is the object of the present Specification, refers to an accessory for pipes, of those configured with the same diameter and constructed with the typical finish in the form of plug or cap at one of their ends, that is to say, provided with a plug re-thickening on one of the same, of the opposite straight end of the other, being provided, for sealing purposes, with conventional means, for example, of a gasket arranged at its end.

These accessories,with supporting purposes, are generally constructed of two similar semi-parts and are provided with diametrically opposed tabs, arranged as insertion supports of the torque means of said accessories.

The invention is characterized by the stepped construction of each semi-part, internally splined and provided with a perforation of the end of the step, the same serving for the torque and for the solidifying stiffening of both pipe ends, absorbing the longitudinal axial forces of the piping assembly.

The said perforation of the bottom of the step, on its part serves for the insertion of the end edge of the plug, which collaborates in this axial stiffening.

Each semi-part also includes a small notch of the internal central zone of the tabs, for passage and insertion, also in the zone of the tab of said pipe end edge.

A reinforcement of a central flat bar configurates the rest of said tab, in the same manner as widenings of each end act as stiffening side plates between the tab and each external edge of the accessory.

### DESCRIPTION OF THE DRAWINGS

In order to complement this description which is being conducted, and with the object of enabling a better and clearer understanding of the characteristics of the invention, the present Specification is enclosed, forming integral part of the same, with a set of drawings in which, with illustrative and never limitative character, the following has been represented:

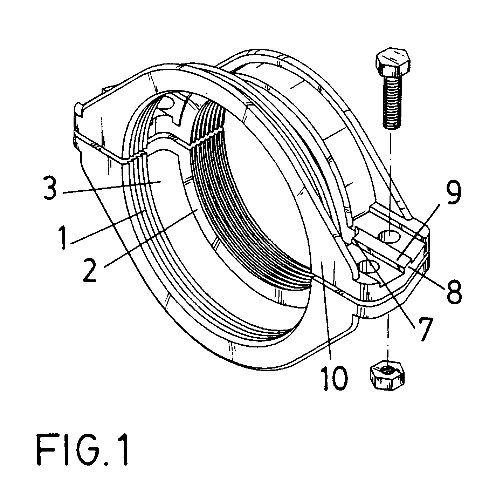

Figure 1 shows a perspective view of the pipe for a better observation of the steps, the perforation of the bottom of the same and the torque splines of the pipe.

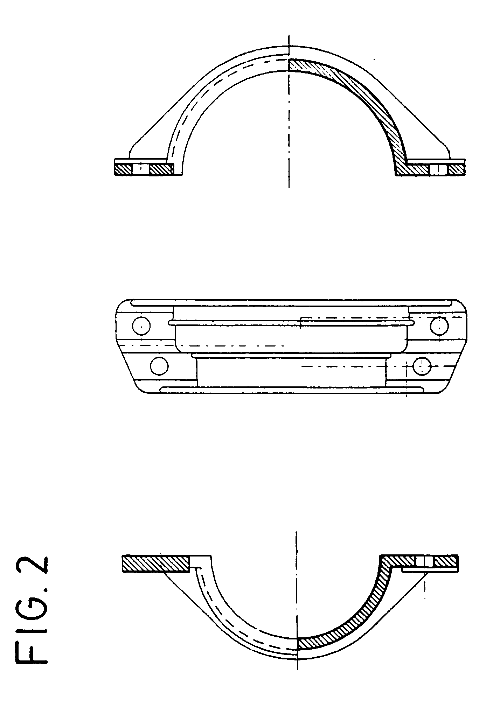

Figure 2 shows three different views of one of the semi-parts.

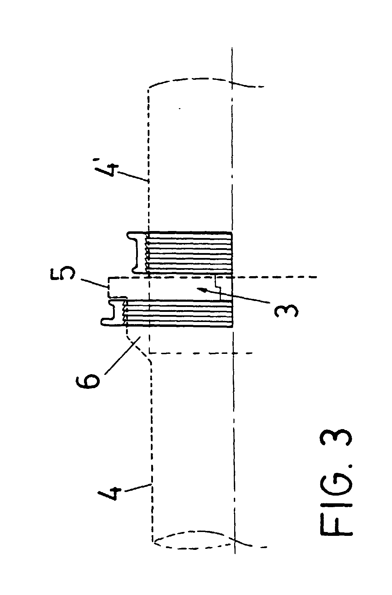

Figure 3 is a partial section of the coupling of the two opposite ends of a conventional pipe, with the upper part of one of the longitudinal axial stiffening semi-parts.

### PREFERRED EMBODIMENT OF THE INVENTION

In view of what has been previously indicated, the present invention refers to an accessory for pipes, with the same diameter and with an end plug of one of the same, for insertion of the opposite straight end of the other, in two equal semi-parts and provided with tabs for insertion of the torque means, which characterizes internal splines (1) stepped (2) and with a perforation (3) of the step (2), the spline (1) serving for the torque and axial stiffening of the pipe (4) and (4') and perforation (3) for the insertion of the edge (5) of the plug (6), as well as of a notch (7) of the tab (8), in such a manner, that the edge (5) collaborates in this axial stiffening.

The tab (8) is additionally provided with a central reinforcement (9) and with stiffening side plates (10).

This description is not made more extensive, with the understanding that any expert in the art shall have sufficient information to understand the scope of the invention and the advantages derived from it, and in order to proceed to reproduce the same.

It is understood, that provided the essentiality of the invention is not altered, variations regarding both the materials and the shape, the size and the arrangement of the elements are capable of variation characterized within the same.

The terms used during the description and the meaning of the same shall always be considered in a non limitative manner.

## Claims

1. Accessory for pipes, of those with the same diameter and with end plug on one of the same, on the straight end opposed to the other, in two equal semi-parts and provided with tabs for the torque means, essentially characterized in that it includes internal splines (1) stepped (2) for torque and axial stiffening of the pipe (4) and (4') and with a perforation (3) of the step (2), for insertion of the edge (5) of the plug (6), also penetrating inside a notch (7) of the tab (8), so that the edge (5) collaborates in this axial stiffening.

2. Accessory for pipes, according to the previous claim, characterized in that the tab (8) is provided with a central reinforcement (9) and of stiffening side plates (10).
